(19) Europäisches Patentamt
European Patent Office
Office européen des brevets

(11) EP 3 858 798 A1

(12) EUROPEAN PATENT APPLICATION
published in accordance with Art. 153(4) EPC

(43) Date of publication:
04.08.2021 Bulletin 2021/31

(51) Int Cl.:
C03C 27/12 (2006.01)    B32B 17/10 (2006.01)

(21) Application number: 19865625.8

(86) International application number:
PCT/JP2019/037931

(22) Date of filing: 26.09.2019

(87) International publication number:
WO 2020/067325 (02.04.2020 Gazette 2020/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.09.2018 JP 2018180327

(71) Applicant: Sekisui Chemical Co., Ltd.
Osaka-shi, Osaka 530-0047 (JP)

(72) Inventors:
• YASUHARA, Shunya
Koka-shi, Shiga 528-8585 (JP)
• MORI, Michiko
Koka-shi, Shiga 528-8585 (JP)
• KONDOU, Masaya
Kyoto-shi, Kyoto 601-8105 (JP)
• KIDO, Koji
Koka-shi, Shiga 528-8585 (JP)
• NAKAYAMA, Kazuhiko
Koka-shi, Shiga 528-8585 (JP)

(74) Representative: Cabinet Beau de Loménie
158, rue de l'Université
75340 Paris Cedex 07 (FR)

(54) LAMINATED-GLASS INTERLAYER, AND LAMINATED GLASS

(57) The present invention provides an interlayer film for a laminated glass capable of providing a laminated glass that reduces the occurrence of optical distortion, a laminated glass including the interlayer film for a laminated glass, and a method for producing the interlayer film for a laminated glass. Provided is an interlayer film for a laminated glass, having a maximum thickness curvature in a width direction of the interlayer film for a laminated glass of 0.010 m$^{-1}$ or less.

EP 3 858 798 A1

**Description**

TECHNICAL FIELD

The present invention relates to an interlayer film for a laminated glass capable of providing a laminated glass that reduces the occurrence of optical distortion, and a laminated glass including the interlayer film for a laminated glass.

BACKGROUND ART

A laminated glass including two glass plates integrated through an interlayer film for a laminated glass containing a thermoplastic resin such as plasticized polyvinyl butyral is widely used as window glass of automobiles, aircraft, buildings, and the like.

Not only monolayer interlayer films consisting only of one resin layer, but also multilayer interlayer films consisting of a laminate of two or more resin layers have been proposed. A multilayer interlayer film for a laminated glass including a first resin layer and a second resin layer that have different characteristics will exhibit various properties that are difficult to achieve with an interlayer film consisting only of one layer.

For example, Patent Literature 1 discloses an interlayer film for a laminated glass that has a three-layer structure including a sound insulation layer interposed between two protective layers. The sound insulation layer of the interlayer film for a laminated glass of Patent Literature 1 contains a polyvinyl acetal resin highly compatible with a plasticizer and a large amount of plasticizer, thus allowing the interlayer film to exhibit excellent sound insulation properties. The protective layers prevent the large amount of plasticizer in the sound insulation layer from bleeding out, thus preventing a reduction in the adhesion between the interlayer film and the glass.

A laminated glass is required to have various optical characteristics depending on use. For example, for a laminated glass used as the windshield of an automobile, it is important that optical distortion is minimized. Optical distortion is a phenomenon that an image formed in front of a laminated glass appears distorted when the laminated glass is tilted in the same way as a windshield. Optical distortion decreases the driver's visual performance and may severely impair driving. However, the cause of optical distortion has yet to be sufficiently identified. Thus, it is difficult to provide a laminated glass that reduces the occurrence of optical distortion.

CITATION LIST

- Patent Literature

Patent Literature 1: JP 2007-331959 A

SUMMARY OF INVENTION

- Technical problem

In view of the situation in the art, the present invention aims to provide an interlayer film for a laminated glass capable of providing a laminated glass that reduces the occurrence of optical distortion, and a laminated glass including the interlayer film for a laminated glass.

- Solution to problem

The present invention relates to an interlayer film for a laminated glass having a maximum thickness curvature in a width direction of the interlayer film for a laminated glass of 0.010 $m^{-1}$ or less.

The present invention is described in detail below.

The present inventors studied the cause of optical distortion in a laminated glass. As a result, they found out that optical distortion occurs because a laminated glass behaves like lens in a region where the thickness of the laminated glass varies locally in the width direction and thus collects or scatters light.

The present inventors then studied the cause of the local thickness variation in the width direction that causes optical distortion. As a result, they found out that such thickness variation is attributable to the interlayer film for the laminated glass.

A laminated glass may be produced by, for example, a rubber bag method. In the rubber bag method, an interlayer film for a laminated glass is first unwound from a roll and cut to an appropriate size. The interlayer film for a laminated glass is then interposed between at least two glass plates to prepare a laminate. The laminate is put in a rubber bag and vacuum suctioned for preliminary pressure bonding while the air remaining between the glass plates and the interlayer film is removed. Then, the laminate is pressurized with heat in, for example, an autoclave so as to perform final pressure bonding. In a nip roll method, for example, an interlayer film for a laminated glass is interposed between at least two glass plates to prepare a laminate, and the laminate is conveyed on a conveyer through a heating zone so that the laminate is heated to a predetermined temperature. The laminate is then passed between nip rolls. This squeezes out the air remaining between the glass and the interlayer film while the laminate is thermally pressure-bonded. The air remaining between the interlayer film and the glass of the laminate is thus reduced, whereby the laminate is preliminarily pressure-bonded. The obtained laminate, with less air between the glass and the interlayer film, is subjected to final pressure bonding in an autoclave at high temperature and high pressure.

In producing a laminated glass by such methods, local thickness variation of the interlayer film for a laminated glass in the width direction causes the glass of the laminate to curve along the interlayer film for a laminated glass. This causes the resulting laminated glass to also have local thickness variation in the width direction, which presumably causes optical distortion.

The present inventors further made intensive studies and found out that a laminated glass that reduces the occurrence of optical distortion can be provided by controlling the local thickness variation of the interlayer film for a laminated glass in the width direction such that the maximum thickness curvature in the width direction is 0.010 m$^{-1}$ or less. The inventors thus completed the present invention.

The interlayer film for a laminated glass of the present invention has a maximum thickness curvature in the width direction of the interlayer film for a laminated glass of 0.010 m$^{-1}$ or less. This interlayer film makes it possible to provide a laminated glass that reduces the occurrence of optical distortion. The maximum curvature of the interlayer film for a laminated glass in the width direction is preferably 0.008 m$^{-1}$ or less, more preferably 0.007 m$^{-1}$ or less.

The lower limit of the maximum thickness curvature of the interlayer film for a laminated glass in the width direction is not limited, and is preferably 0.000 m$^{-1}$ or more when rounded off to the third decimal place.

The interlayer film for a laminated glass of the present invention preferably has a maximum thickness difference in the width direction of 15 $\mu$m or less as measured in a 150-mm section. This makes it possible to provide a laminated glass that further reduces the occurrence of optical distortion. The maximum thickness difference of the interlayer film for a laminated glass in the width direction is more preferably 8 $\mu$m or less.

Herein, the maximum thickness difference in the width direction as measured in a 150-mm section of the interlayer film for a laminated glass means the difference between the maximum measured thickness value and the minimum measured thickness value in a 150-mm section.

The width direction of the interlayer film for a laminated glass herein means a direction that is perpendicular, in the same plane, to the machine direction in production of the interlayer film for a laminated glass. The machine direction of the interlayer film for a laminated glass as used herein refers to a direction in which a raw material resin composition is extruded from an extruder in the production of an interlayer film for a laminated glass.

The machine direction of the interlayer film for a laminated glass can be confirmed by the following method, for example. Specifically, the interlayer film for a laminated glass is stored in a thermostat bath at 140°C for 30 minutes, and one of the parallel direction and vertical direction of the film in which the shrinkage ratio is greater is the machine direction. Also, the machine direction is confirmed based on the winding direction of a roll of the interlayer film for a laminated glass. Since an interlayer film for a laminated glass is wound into a roll in the machine direction of the film in production thereof, the winding direction of a roll of the interlayer film for a laminated glass coincides with the machine direction of the film in production of the interlayer film for a laminated glass.

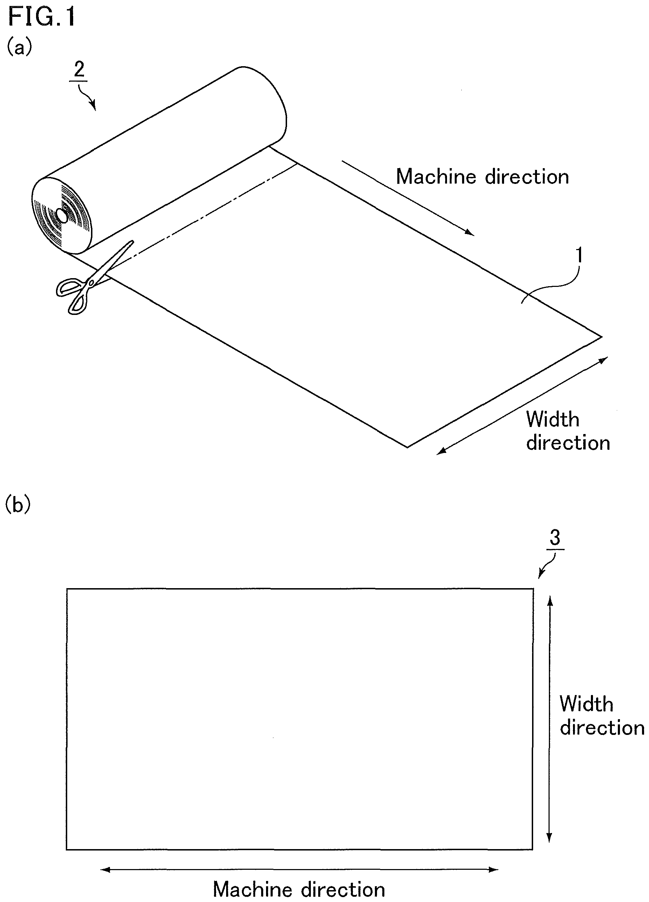

The following specifically describes, with reference to Fig. 1, the methods for measuring the maximum thickness curvature and maximum thickness difference of the interlayer film for a laminated glass in the present invention in the width direction.

In Fig. 1(a), first, an interlayer film for a laminated glass 1 is drawn out from a roll 2. The direction in which the interlayer film for a laminated glass is drawn out at this time is the machine direction in production of the interlayer film for a laminated glass. The direction that is perpendicular, in the same plane, to the machine direction is the width direction. The interlayer film for a laminated glass drawn out is cut at a position of at least 70 cm in the machine direction, whereby a test sample with a size of 70 cm × film width (usually 1 m) is obtained. The test sample is left to stand on a flat surface at 20°C and 30 RH% or lower for 24 hours before subjected to measurement. After standing, the thickness is measured continuously from one end to the other end of the test sample in the width direction at a rate of 1.5 m/min using a micrometer (e.g., KG601B-type wide-range electronic micrometer produced by Anritsu Corporation). Thus, the thickness is recorded at a 0.4 mm pitch. The thickness is measured at 20°C and 30 RH% or lower.

Next, based on the obtained thickness data in the width direction, the maximum thickness curvature of the interlayer film for a laminated glass in the width direction is calculated.

Specifically, based on the obtained thickness data in the width direction, the measured data (raw data output at intervals of 0.4 mm) is subjected to 40-mm-section simple moving averaging while moving the section from an end of the measurement site by 0.4 mm at a time. After the simple moving averaging, a cubic polynomial approximate expression is obtained by the least square method in each 30-mm section while shifting the initial value by 0.4 mm at a time. The curvature at the center of each section is calculated using a polynomially approximated function f(x). The curvature is calculated by the following formula (1).

Then, the maximum value of the curvatures calculated in the sections is determined, and taken as the maximum thickness curvature in the width direction of the test sample.

[Math. 1]

$$f(x) = \frac{f''(x)}{(1 + f'(x)^2)^{\frac{3}{2}}}$$

Separately, based on the obtained thickness data in the width direction, the maximum thickness difference of the interlayer film for a laminated glass in the width direction is calculated.

Specifically, based on the obtained thickness data in the width direction, the maximum difference (difference between a point having the maximum thickness and a point having a minimum thickness) is determined in each 150-mm section while moving the section from an end of the measurement site by 0.4 mm at a time. The maximum difference in each 150-mm section in the width direction is calculated, and the largest of the maximum differences is taken as the maximum thickness difference of the test sample.

The interlayer film for a laminated glass of the present invention preferably contains a thermoplastic resin.

Examples of the thermoplastic resin include polyvinylidene fluoride, polytetrafluoroethylene, vinylidene fluoride-propylene hexafluoride copolymers, polytrifluoroethylene, acrylonitrile-butadiene-styrene copolymers, polyesters, polyethers, polyamides, polycarbonates, polyacrylates, polymethacrylates, polyvinyl chloride, polyethylene, polypropylene, polystyrene, polyvinyl acetal, and ethylene-vinyl acetate copolymers. Preferred among them is polyvinyl acetal because it enables easy production of an interlayer film for a laminated glass that satisfies the expansion ratio in the width direction and the shrinkage ratio in the machine direction.

The polyvinyl acetal can be prepared by acetalizing polyvinyl alcohol (PVA) with an aldehyde. The degree of saponification of the PVA is commonly within a range of 70 to 99.9 mol%.

The polyvinyl alcohol (PVA) used to obtain the polyvinyl acetal preferably has a degree of polymerization of 200 or higher, more preferably 500 or higher. The degree of polymerization of the polyvinyl alcohol (PVA) is still more preferably 1,700 or higher, particularly preferably 2000 or higher, while preferably 5,000 or lower, more preferably 4,000 or lower, still more preferably 3,000 or lower, further preferably lower than 3,000, particularly preferably 2,800 or lower. The polyvinyl acetal is preferably a polyvinyl acetal resin obtained by acetalizing PVA that has a degree of polymerization of not lower than the lower limit and not higher than the upper limit. The PVA having a degree of polymerization of not lower than the lower limit can further increase the penetration resistance of the laminated glass. The PVA having a degree of polymerization not higher than the upper limit makes it easy to mold the interlayer film.

The degree of polymerization of the PVA refers to an average degree of polymerization. The average degree of polymerization is determined by the method in conformity with "Testing methods for polyvinyl alcohol", JIS K6726. The aldehyde is commonly preferably a C1-C10 aldehyde. Examples of the C1-C10 aldehyde include formaldehyde, acetaldehyde, propionaldehyde, n-butyraldehyde, isobutyraldehyde, n-valeraldehyde, 2-ethylbutyraldehyde, n-hexylaldehyde, n-octylaldehyde, n-nonylaldehyde, n-decylaldehyde, and benzaldehyde. Preferred among these is n-butyraldehyde, n-hexylaldehyde, or n-valeraldehyde, more preferred is n-butyraldehyde. One aldehyde may be used alone, or two or more aldehydes may be used in combination.

The polyvinyl acetal resin contained in the interlayer film for a laminated glass of the present invention is preferably a polyvinyl butyral resin. Use of a polyvinyl butyral resin further increases the weather resistance and the like of the interlayer film against a laminated glass member.

The interlayer film for a laminated glass of the present invention preferably contains a plasticizer.

The plasticizer is not limited as long as it is a plasticizer commonly used for interlayer films for a laminated glass, and examples thereof include organic plasticizers such as monobasic organic acid esters and polybasic organic acid esters and phosphoric acid plasticizers such as organophosphate compounds and organophosphite compounds.

Examples of the organic plasticizers include triethylene glycol-di-2-ethylhexanoate, triethylene glycol-di-2-ethylbutyrate, triethylene glycol-di-n-heptanoate, tetraethylene glycol-di-2-ethylhexanoate, tetraethylene glycol-di-2-ethylbutyrate, tetraethylene glycol-di-n-heptanoate, diethylene glycol-di-2-ethylhexanoate, diethylene glycol-di-2-ethylbutyrate, and diethylene glycol-di-n-heptanoate. In particular, the interlayer film for a laminated glass contains preferably triethylene glycol-di-2-ethylhexanoate, triethylene glycol-di-2-ethylbutyrate, or triethylene glycol-di-n-heptanoate, more preferably triethylene glycol-di-2-ethylhexanoate.

In the interlayer film for a laminated glass of the present invention, the amount of the plasticizer relative to the thermoplastic resin is not limited. The amount of the plasticizer relative to 100 parts by weight of the thermoplastic resin is preferably 25 parts by weight or more, more preferably 30 parts by weight or more, still more preferably 35 parts by weight or more, while preferably 80 parts by weight or less, more preferably 60 parts by weight or less, still more preferably 50 parts by weight or less. The plasticizer in an amount of not less than the lower limit further increases the penetration resistance of the laminated glass. The plasticizer in an amount of not more than the upper limit further increases the transparency of the interlayer film.

The interlayer film for a laminated glass of the present invention preferably contains an adhesion modifier.

The adhesion modifier used is suitably, for example, an alkali metal salt or an alkaline earth metal salt. Examples of the adhesion modifier include salts of potassium, sodium, magnesium, and the like.

Examples of an acid constituting the salts include organic acids such as carboxylic acids (e.g., octylic acid, hexylic acid, 2-ethylbutyric acid, butyric acid, acetic acid, formic acid) and inorganic acids such as hydrochloric acid and nitric acid.

The interlayer film for a laminated glass of the present invention may include an additive such as an antioxidant, a light stabilizer, a modified silicone oil as an adhesion modifier, a flame retardant, an antistatic agent, a moisture-proof agent, a heat reflecting agent, a heat absorber, an anti-blocking agent, an antistatic agent, and a colorant made of a pigment or dye, as needed.

The interlayer film for a laminated glass of the present invention may have a single layer structure consisting only of one layer of a resin film, or may have a multilayer structure including two or more resin layers laminated together.

In the case where the interlayer film for a laminated glass of the present invention has the multilayer structure and the two or more resin layers include a first resin layer and a second resin layer having different properties, it is possible to provide an interlayer film for a laminated glass that has various properties difficult to achieve with one layer alone. The multilayer structure may include three or more layers, four or more layers, or five or more layers.

The interlayer film for a laminated glass of the present invention having a multilayer structure may be, for example, an interlayer film for a laminated glass with excellent sound insulation properties (hereafter also referred to as a "sound insulation interlayer film") which includes two protective layers as first resin layers and a sound insulation layer as a second resin layer interposed between the two protective layers so as to improve sound insulation properties. The first resin layer or the second resin layer may be a heat-shielding layer containing a heat-shielding agent or a luminescent layer containing a luminescent material.

The sound insulation interlayer film is more specifically described in the following.

In the sound insulation interlayer film, the sound insulation layer imparts sound insulation properties.

The sound insulation layer preferably contains polyvinyl acetal X and a plasticizer.

The polyvinyl acetal X can be prepared by acetalizing polyvinyl alcohol with an aldehyde. The polyvinyl acetal X is preferably an acetalized product of polyvinyl alcohol. The polyvinyl alcohol is commonly prepared by saponifying polyvinyl acetate.

The lower limit of the degree of polymerization of the polyvinyl alcohol is preferably 200 and the upper limit thereof is preferably 5,000. When the polyvinyl alcohol has a degree of polymerization of 200 or higher, the resulting sound insulation interlayer film has better penetration resistance. When the polyvinyl alcohol has a degree of polymerization of 5,000 or lower, the formability of the sound insulation layer can be ensured. The lower limit of the degree of polymerization of the polyvinyl alcohol is more preferably 500 and the upper limit thereof is more preferably 4,000.

The lower limit of the carbon number of the aldehyde used for acetalization of the polyvinyl alcohol is preferably 4 and the upper limit thereof is preferably 6. When the aldehyde has a carbon number of 4 or more, the sound insulation layer can stably contain a sufficient amount of plasticizer to exhibit excellent sound insulation properties. In addition, bleeding of the plasticizer can be prevented. When the aldehyde has a carbon number of 6 or less, synthesis of the polyvinyl acetal X is facilitated, ensuring the productivity.

The aldehyde having a carbon number of 4 to 6 may be a linear or branched aldehyde, and examples thereof include n-butyraldehyde and n-valeraldehyde.

The upper limit of the hydroxy group content of the polyvinyl acetal X is preferably 30 mol%. When the polyvinyl acetal X has a hydroxy group content of 30 mol% or less, the sound insulation layer can contain a plasticizer in an amount needed for exhibiting sound insulation properties and bleeding of the plasticizer can be prevented. The upper limit of the hydroxy group content of the polyvinyl acetal X is more preferably 28 mol%, still more preferably 26 mol%, particularly preferably 24 mol% and the lower limit thereof is preferably 10 mol%, more preferably 15 mol%, still more preferably 20 mol%.

The hydroxy group content of the polyvinyl acetal X is a value in percentage (mol%) of the mole fraction obtained by dividing the amount of ethylene groups to which hydroxy groups are bonded by the amount of all the ethylene groups in the main chain. The amount of ethylene groups to which hydroxy groups are bonded can be obtained by measuring the amount of ethylene groups to which hydroxy groups are bonded in the polyvinyl acetal X by a method in conformity with "Testing methods for polyvinyl butyral", JIS K6728.

The lower limit of the acetal group content of the polyvinyl acetal X is preferably 60 mol% and the upper limit thereof is preferably 85 mol%. When the acetal group content of the polyvinyl acetal X is 60 mol% or more, the sound insulation layer has higher hydrophobicity to be able to contain a plasticizer in an amount needed for exhibiting sound insulation properties. In addition, bleeding of the plasticizer and whitening can be prevented. When the acetal group content of the polyvinyl acetal X is 85 mol% or less, synthesis of the polyvinyl acetal X is facilitated to ensure the productivity. The acetal group content can be obtained by measuring the amount of ethylene groups to which acetal groups are bonded in the polyvinyl acetal X by the method in conformity with "Testing methods for polyvinyl butyral", JIS K6728.

The lower limit of the acetyl group content of the polyvinyl acetal X is preferably 0.1 mol% and the upper limit thereof is preferably 30 mol%. When the polyvinyl acetal X has an acetyl group content of 0.1 mol% or more, the sound insulation layer can contain a plasticizer in an amount needed for exhibiting sound insulation properties. In addition, bleeding of the plasticizer can be prevented. When the polyvinyl acetal X has an acetyl group content of 30 mol% or less, the sound insulation layer has higher hydrophobicity, thereby preventing whitening. The lower limit of the acetyl group content is more preferably 1 mol%, still more preferably 5 mol%, particularly preferably 8 mol% and the upper limit thereof is more preferably 25 mol%, still more preferably 20 mol%. The acetyl group content is a value in percentage of the mole fraction (mol%) obtained by subtracting the amount of ethylene groups to which acetal groups are bonded and the amount of ethylene groups to which hydroxy groups are bonded from the amount of all the ethylene groups in the main chain and dividing the resulting value by the amount of all the ethylene groups in the main chain.

In particular, the polyvinyl acetal X preferably is a polyvinyl acetal having an acetyl group content of 8 mol% or more or a polyvinyl acetal having an acetyl group content of less than 8 mol% and an acetal group content of 68 mol% or more because the sound insulation layer can easily contain a plasticizer in an amount needed for exhibiting sound insulation properties.

The lower limit of the amount of the plasticizer in the sound insulation layer is preferably 45 parts by weight and the upper limit thereof is preferably 80 parts by weight, relative to 100 parts by weight of the polyvinyl acetal X. When the amount of the plasticizer is 45 parts by weight or more, high sound insulation properties can be exhibited. When the amount of the plasticizer is 80 parts by weight or less, reduction in transparency or adhesion of the interlayer film for a laminated glass caused by bleeding of the plasticizer can be prevented. The lower limit of the amount of the plasticizer is more preferably 50 parts by weight, still more preferably 55 parts by weight and the upper limit thereof is more preferably 75 parts by weight, still more preferably 70 parts by weight.

In the case where the sound insulation layer has a rectangular cross section in the thickness direction, the lower limit of the thickness of the sound insulation layer is preferably 50 $\mu$m. The sound insulation layer having a thickness of 50 $\mu$m or more can exhibit sufficient sound insulation properties. The lower limit of the thickness of the sound insulation layer is more preferably 70 $\mu$m, still more preferably 80 $\mu$m. The upper limit of the thickness is not limited, but is preferably 150 $\mu$m considering the thickness as an interlayer film for a laminated glass.

The sound insulation layer has one end and the other end that is an opposite end of the one end, and the other end may be thicker than the one end. The sound insulation layer preferably has a wedge-shaped portion in the cross section in the thickness direction. In such a case, the lower limit of the minimum thickness of the sound insulation layer is preferably 50 $\mu$m. The sound insulation layer having a minimum thickness of 50 $\mu$m or more can exhibit sufficient sound insulation properties. The lower limit of the minimum thickness of the sound insulation layer is more preferably 80 $\mu$m, still more preferably 100 $\mu$m. The upper limit of the maximum thickness of the sound insulation layer is not limited. Considering the thickness as an interlayer film for a laminated glass, the upper limit is preferably 300 $\mu$m. The upper limit of the maximum thickness of the sound insulation layer is more preferably 220 $\mu$m.

The protective layers prevent reduction in adhesion between the interlayer film for a laminated glass and glass due to bleeding of a large amount of plasticizer contained in the sound insulation layer and also impart penetration resistance to the interlayer film for a laminated glass.

The protective layers contain preferably polyvinyl acetal Y and a plasticizer, more preferably polyvinyl acetal Y having a higher hydroxy group content than the polyvinyl acetal X and a plasticizer.

The polyvinyl acetal Y can be prepared by acetalizing polyvinyl alcohol with an aldehyde. The polyvinyl acetal Y is preferably an acetalized product of polyvinyl alcohol.

The polyvinyl alcohol can be normally prepared by saponifying polyvinyl acetate. The lower limit of the degree of polymerization of the polyvinyl alcohol is preferably 200 and the upper limit thereof is preferably 5,000. When the polyvinyl alcohol has a degree of polymerization of 200 or higher, the interlayer film for a laminated glass has better penetration resistance. When the polyvinyl alcohol has a degree of polymerization of 5,000 or lower, the formability of the sound insulation layer can be ensured. The lower limit of the degree of polymerization of the polyvinyl alcohol is more preferably 500 and the upper limit thereof is more preferably 4,000.

The lower limit of the carbon number of the aldehyde for acetalization of the polyvinyl alcohol is preferably 3 and the upper limit thereof is preferably 4. When the aldehyde has a carbon number of 3 or more, the interlayer film for a laminated glass has better penetration resistance. When the aldehyde has a carbon number of 4 or less, the productivity of the polyvinyl acetal Y is improved.

The C3-C4 aldehyde may be a linear or branched aldehyde, and examples thereof include n-butyraldehyde.

The upper limit of the hydroxy group content of the polyvinyl acetal Y is preferably 33 mol% and the lower limit thereof is preferably 28 mol%. When the polyvinyl acetal Y has a hydroxy group content of 33 mol% or less, whitening of the interlayer film for a laminated glass can be prevented. When the polyvinyl acetal Y has a hydroxy group content of 28 mol% or more, the penetration resistance of the interlayer film for a laminated glass can be improved.

The lower limit of the acetal group content of the polyvinyl acetal Y is preferably 60 mol% and the upper limit thereof is preferably 80 mol%. When the acetal group content is 60 mol% or more, the protective layers can contain a plasticizer in an amount needed for exhibiting sufficient penetration resistance. When the acetal group content is 80 mol% or less, the adhesive force between each protective layer and glass can be ensured. The lower limit of the acetal group content is more preferably 65 mol% and the upper limit thereof is more preferably 69 mol%.

The upper limit of the acetyl group content of the polyvinyl acetal Y is preferably 7 mol%. When the acetyl group content of the polyvinyl acetal Y is 7 mol% or less, the protective layers have higher hydrophobicity, thereby preventing whitening. The upper limit of the acetyl group content is more preferably 2 mol% and the lower limit thereof is preferably 0.1 mol%. The hydroxy group content, acetal group content, and acetyl group content of the polyvinyl acetal Y can be measured by the same methods as those for the polyvinyl acetal X.

The lower limit of the amount of the plasticizer in each protective layer is preferably 20 parts by weight and the upper limit thereof is preferably 45 parts by weight, relative to 100 parts by weight of the polyvinyl acetal Y. When the amount of the plasticizer is 20 parts by weight or more, the penetration resistance can be ensured. When the amount of the plasticizer is 45 parts by weight or less, bleeding of the plasticizer can be prevented so that reduction in the transparency or adhesion of the interlayer film for a laminated glass can be prevented. The lower limit of the amount of the plasticizer is more preferably 30 parts by weight, still more preferably 35 parts by weight and the upper limit thereof is more preferably 43 parts by weight, still more preferably 41 parts by weight. For further enhancement of the sound insulation properties of the laminated glass, the amount of the plasticizer in each protective layer is preferably smaller than the amount of the plasticizer in the sound insulation layer.

For further enhancement of the sound insulation properties of the laminated glass, the hydroxy group content of the polyvinyl acetal Y is preferably higher than the hydroxy group content of the polyvinyl acetal X. The hydroxy group content of the polyvinyl acetal Y is higher than the hydroxy group content of the polyvinyl acetal X more preferably by 1 mol% or more, still more preferably by 5 mol% or more, particularly preferably by 8 mol% or more. Adjustment of the hydroxy group contents of the polyvinyl acetal X and the polyvinyl acetal Y enables control of the amounts of the plasticizer in the sound insulation layer and the protective layers, lowering the glass transition temperature of the sound insulation layer. As a result, the sound insulation properties of the laminated glass are further improved.

For further improvement of the sound insulation properties of the laminated glass, the amount of the plasticizer relative to 100 parts by weight of the polyvinyl acetal X in the sound insulation layer (hereafter, also referred to as amount X) is preferably larger than the amount of the plasticizer relative to 100 parts by weight of the polyvinyl acetal Y in each protective layer (hereafter, also referred to as amount Y). The amount X is larger than the amount Y more preferably by 5 parts by weight or more, still more preferably by 15 parts by weight or more, particularly preferably by 20 parts by weight or more. Adjustment of the amount X and the amount Y lowers the glass transition temperature of the sound insulation layer. As a result, the sound insulation properties of the laminated glass are further improved.

In the case where each protective layer has a rectangular cross section, the lower limit of the thickness of each protective layer is preferably 200 μm and the upper limit thereof is preferably 1,000 μm. The protective layers having a thickness of 200 μm or more can ensure penetration resistance. The lower limit of the thickness of each protective layer is more preferably 300 μm and the upper limit thereof is more preferably 700 μm.

Each protective layer has one end and the other end that is an opposite end of the one end, and the other end may be thicker than the one end. Each protective layer preferably has a wedge-shaped portion in the cross section in the thickness direction. Each protective layer may be adjusted to have any thickness with which the protective layer can fulfill its function. In the case where each protective layer have protrusions and recesses formed thereon, each protective layer is preferably thickened within a possible range so as to avoid transferring of the protrusions and recesses to the interface between the protective layer and the sound insulation layer directly in contact with the protective layer. Specifically, the lower limit of the minimum thickness of each protective layer is preferably 100 μm, more preferably 300 μm, still more preferably 400 μm, particularly preferably 450 μm. The upper limit of the maximum thickness of each protective layer is not limited. For ensuring sufficient thickness of the sound insulation layer to achieve sufficient sound insulation properties, the upper limit is practically around 1,000 μm, preferably 800 μm.

The interlayer film for a laminated glass of the present invention may have one end and the other end that is an opposite end of the one end. The one end and the other end are both end portions opposing to each other of the interlayer film. In the interlayer film for a laminated glass of the present invention, the other end is preferably thicker than the one end. Such a difference in thickness between the one end and the other end allows the laminated glass produced using the interlayer film for a laminated glass of the present invention to be suitably used as a head-up display, and also effectively prevents double image phenomenon in use of the head-up display. The interlayer film for a laminated glass of the present invention may have a wedge-shaped cross section. In the case of the interlayer film for a laminated glass having a wedge-shaped cross section, the wedge angle θ of the wedge shape can be controlled depending on the angle to attach the laminated glass, so that images can be displayed on the head-up display without double image phenomenon. For further preventing double image phenomenon, the lower limit of the wedge angle θ is preferably 0.1 mrad, more preferably 0.2 mrad, still more preferably 0.3 mrad, and the upper limit thereof is preferably 1 mrad, more preferably 0.9 mrad. In the case where the interlayer film for a laminated glass having a wedge-shaped cross section is produced by, for example, extrusion molding a resin composition using an extruder, the interlayer film may have its minimum thickness in a region slightly inward from one end on the thinner side. The interlayer film may also have its maximum thickness in a region slightly inward from one end on the thicker side. ("The region slightly inward" means a region spaced inward from one end on the thicker side or thinner side by a distance of 0X to 0.2X, where X is the distance between the one end and the other end). Such a shape is herein also included in the wedge shape.

The sound insulation interlayer film may be produced by any method. For example, it may be produced by a method in which the sound insulation layer and protective layers are each produced in a sheet form by a usual film production method such as an extrusion method, a calender method, or a press method, and then laminated together.

The interlayer film for a laminated glass of the present invention may be produced by any method. For example, it may be produced by a method in which a raw material resin composition is extrusion molded through an extruder. Here, by controlling the conditions in the extrusion molding, it is possible to produce an interlayer film for a laminated glass that satisfies the above maximum thickness curvature in the width direction and the above maximum thickness difference in the width direction. In the case of embossing a surface of the interlayer film for a laminated glass, use of a method using an embossing roll makes it difficult to obtain an interlayer film for a laminated glass that satisfies the maximum thickness curvature in the width direction and the maximum thickness difference in the width direction. Thus, the interlayer film is preferably produced using a lip method in which the shape of the extruder die is adjusted to impart protrusions and recesses.

More specifically, preferably, (1) the die of the extruder used in the lip method has a straightness of 4 μm or less over 1,000 mm in a width direction of the die and includes protrusions and recesses of a size of 2 μm or smaller in an 80-mm section of the width direction, and (2) preferably, press rolls having a cylindricity of 4 μm or less are used. Controlling the extrusion conditions as above makes it possible to produce an interlayer film for a laminated glass that satisfies the maximum thickness curvature in the width direction and the maximum thickness difference in the width direction.

The present invention also encompasses a method for producing the interlayer film for a laminated glass of the present invention, including a step of imparting protrusions and recesses to a surface of the interlayer film for a laminated glass while extrusion molding a raw material resin composition through an extruder, the step being performed by a lip method, the extruder including a die that has a straightness of 4 μm or less over 1,000 mm in a width direction of the die and includes protrusions and recesses of a size of 2 μm or smaller in an 80-mm section in the width direction.

In the interlayer film for a laminated glass of the present invention, local thickness variation in the width direction is controlled such that the maximum thickness curvature in the width direction is adjusted to be 0.010 m$^{-1}$ or less. Thus, a laminated glass including this interlayer film also has less local thickness variation in the width direction. The resulting laminated glass thus can significantly reduce optical distortion.

The degree of optical distortion can be evaluated by a distortion test.

The present invention also encompasses a laminated glass including a pair of glass plates and the interlayer film for a laminated glass of the present invention interposed between the pair of glass plates, the interlayer film for a laminated glass in the laminated glass having a maximum thickness curvature in the width direction of 0.004 m$^{-1}$ or less. The laminated glass in which the interlayer film for a laminated glass has a maximum thickness curvature in the width direction of 0.004 m$^{-1}$ or less can even further reduce optical distortion. The maximum thickness curvature of the interlayer film for a laminated glass in the laminated glass in the width direction is more preferably 0.003 m$^{-1}$ or less.

The present invention also encompasses a laminated glass including a pair of glass plates and the interlayer film for a laminated glass of the present invention interposed between the pair of glass plates, the laminated glass having a maximum thickness curvature in a width direction of the laminated glass of 0.010 m$^{-1}$ or less. The laminated glass that itself has a maximum thickness curvature in the width direction of 0.010 m$^{-1}$ or less can even further reduce optical distortion. The maximum thickness curvature of the laminated glass in the width direction is more preferably 0.003 m$^{-1}$ or less.

Here, the width direction of the laminated glass corresponds to the width direction of the interlayer film for a laminated glass.

The glass plates may be commonly used transparent glass plates. Examples thereof include inorganic glass plates such as float glass plates, polished glass plates, figured glass plates, meshed glass plates, wired glass plates, colored glass plates, heat-absorbing glass plates, heat-reflecting glass plates, and green glass plates. A UV-blocking glass plate having a UV-blocking layer formed on a glass surface may also be used. Other examples of the glass plates include organic plastic plates made of polyethylene terephthalate, polycarbonate, polyacrylate, or the like.

The glass plates may include two or more types of glass plates. For example, the laminated glass may be a laminated glass including the interlayer film for a laminated glass of the present invention between a transparent float glass plate and a colored glass plate such as a green glass plate. The glass plates may include two or more glass plates with different thicknesses.

The methods for measuring the maximum thickness curvature and maximum thickness difference of the laminated glass of the present invention in the width direction are substantially the same as the above methods for measuring the maximum thickness curvature and maximum thickness difference of the interlayer film for a laminated glass in the width direction. The test sample used is prepared by allowing the produced laminated glass to sufficiently stand and cool at 20°C and 30RH%.

- Advantageous Effects of Invention

The present invention can provide an interlayer film for a laminated glass capable of providing a laminated glass that reduces the occurrence of optical distortion, a laminated glass including the interlayer film for a laminated glass, and a method for producing the interlayer film for a laminated glass.

BRIEF DESCRIPTION OF DRAWINGS

Fig. 1 shows schematic views explaining methods for measuring the maximum thickness curvature and maximum thickness difference of an interlayer film for a laminated glass in the width direction.
Fig. 2 shows a schematic view explaining a distortion test in the evaluation of examples and comparative examples.

DESCRIPTION OF EMBODIMENTS

Embodiments of the present invention are specifically described in the following with reference to, but not limited to, examples.

(Example 1)

(1) Production of interlayer film for laminated glass

To 100 parts by weight of polyvinyl butyral were added 40 parts by weight of a plasticizer, 0.5 parts by weight of an UV blocking agent, and 0.5 parts by weight of an antioxidant. The materials were sufficiently kneaded in a mixing roll, whereby a resin composition was prepared. The polyvinyl butyral had a hydroxy group content of 30 mol%, an acetyl group content of 1 mol%, a butyral group content of 69 mol%, and an average degree of polymerization of 1,700. The plasticizer used was triethylene glycol-di-2-ethylhexanoate (3GO). The UV blocking agent used was 2-(2'-hydroxy-3'-t-butyl-5-methylphenyl)-5-chlorobenzotriazole (produced by BASF, "Tinuvin 326"). The antioxidant used was 2,6-di-t-butyl-p-cresol (BHT).

The obtained resin composition was extruded through an extruder into a single-layer interlayer film for a laminated glass having a width of 100 cm, and the interlayer film was wound into a roll.

The die of the extruder used in the lip method at this time had a straightness of 4 $\mu$m over 1,000 mm in the width direction and included protrusions and recesses of a size of 2 $\mu$m in an 80-mm section in the width direction. The press rolls used had a cylindricity of 3 $\mu$m.

The interlayer film for a laminated glass was drawn out from the obtained roll and cut at a position of 70 cm in the machine direction, whereby a test sample having a size of 70 cm $\times$ film width (1 m) was obtained. The test sample was left to stand on a flat surface at 20°C and 30 RH% or lower for 24 hours before subjected to measurement. After standing, the thickness was measured continuously from one end to the other end of the test sample in the width direction at a rate of 1.5 m/min using a micrometer (KG601B-type wide-range electronic micrometer produced by Anritsu Corporation). Thus, the thickness was recorded at a 0.4 mm pitch. The thickness was measured at 20°C and 30 RH% or lower. Next, based on the obtained thickness data in the width direction, the maximum thickness curvature of the interlayer film for a laminated glass in the width direction was calculated. First, based on the obtained thickness data in the width direction, the measured data (raw data output at intervals of 0.4 mm) was subjected to 40-mm-section simple moving averaging while moving the section from an end of the measurement site by 0.4 mm at a time. After the simple moving averaging, a cubic polynomial approximate expression was obtained by the least square method in each 30-mm section while shifting the initial value by 0.4 mm at a time. The curvature at the center of the section was calculated using a polynominally approximated function f(x). The curvature was calculated by the above formula (1). Then, the maximum value of the curvatures calculated in the sections was determined, and taken as the maximum thickness curvature in the width direction of the test sample.

Separately, based on the obtained thickness data in the width direction, the maximum thickness difference of the interlayer film for a laminated glass in the width direction was calculated. Specifically, based on the obtained thickness data in the width direction, the maximum difference (difference between a point having the maximum thickness and a point having a minimum thickness) was determined in each 150-mm section while moving the section from an end of the measurement site by 0.4 mm at a time. The maximum difference in each 150-mm section in the width direction was calculated, and the largest of the maximum differences was taken as the maximum thickness difference of the text sample.

(2) Production of laminated glass

The interlayer film for a laminated glass was drawn out from the obtained roll and cut at a position of 70 cm in the machine direction, whereby an interlayer film for a laminated glass having a size of 70 cm × film width (1 m) was obtained. The interlayer film for a laminated glass was left to stand on a flat surface at 20°C and 30 RH% or lower for 24 hours, and then used to produce a laminated glass.

The interlayer film for a laminated glass was interposed between two glass plates (each having a thickness of 1.7 mm, a width of 750 mm, and a length of 500 mm) such that the width direction of the interlayer film was in parallel with the crosswise direction of the glass plates, that the machine direction of the interlayer film for a laminated glass was in parallel with the lengthwise direction of the glass plates, and that the center of the interlayer film for a laminated glass was positioned at the center of the glass plates. The interlayer film for a laminated glass protruding from the glass plates was cut off, whereby a laminate was obtained.

The obtained laminate was conveyed on a conveyer through a heating zone so that the laminate was heated, and then passed between nip rolls to squeeze out the air remaining between the glass and the interlayer film while the laminate was thermally pressure-bonded. The air between the interlayer film for a laminated glass and the glass was thus reduced, whereby the laminate was preliminarily pressure bonded. The laminate after the preliminary pressure bonding was subjected to final pressure bonding in an autoclave at high temperature and high pressure, whereby a laminated glass was obtained.

The heating temperature in the heating zone was 220°C. The glass surface temperature after passing through the heating zone was 80°C. The heating time was one minute or shorter, and the nip pressure was 3 $kg/cm^2$ or lower. The temperature inside the autoclave was 140°C at maximum, and the maximum pressure was 14 $kg/cm^2$. The heating and pressurizing time in the autoclave was at most 30 minutes.

For the obtained laminated glass, in the same manner as in the above shape evaluation of the interlayer film for a laminated glass, calculations were performed to determine the maximum thickness curvature of the laminated glass in the width direction and the maximum thickness curvature of the interlayer film for a laminated glass in the laminated glass in the width direction.

(Comparative Example 1)

An interlayer film for a laminated glass was obtained as in Example 1 and wound into a roll, except that the die of the extruder used in the lip method had a straightness of 7 $\mu$m over 1,000 mm in the width direction and included protrusions and recesses of a size of 2 $\mu$m in an 80-mm section in the width direction, and that the press rolls used had a cylindricity of 5 $\mu$m. A laminated glass was also produced as in Example 1.

(Comparative Example 2)

An interlayer film for a laminated glass was obtained as in Example 1 and wound into a roll, except that the die of the extruder used in the lip method had a straightness of 8 $\mu$m over 1,000 mm in the width direction and included protrusions and recesses of a size of 2 $\mu$m in an 80-mm section in the width direction, and that the press rolls used had a cylindricity of 6 $\mu$m. A laminated glass was also produced as in Example 1, and the maximum thickness curvature of the laminated glass in the width direction was calculated.

(Example 2)

(1) Preparation of resin composition for protective layer

To 100 parts by weight of a polyvinyl butyral resin were added 38.8 parts by weight of a plasticizer, 0.5 parts by weight of an UV blocking agent, and 0.5 parts by weight of an antioxidant. The materials were sufficiently kneaded in a mixing roll, whereby a protective layer resin composition was prepared. The polyvinyl butyral had a hydroxy group content of 30 mol%, an acetyl group content of 1 mol%, a butyral group content of 69 mol%, and an average degree of polymerization of 1,700. The UV blocking agent used was "Tinuvin 326" produced by BASF. The plasticizer used was triethylene glycol-di-2-ethylhexanoate (3GO). The UV blocking agent used was 2-(2'-hydroxy-3'-t-butyl-5-methylphenyl)-5-chlorobenzotriazole (produced by BASF, "Tinuvin 326"). The antioxidant used was 2,6-di-t-butyl-p-cresol (BHT).

(2) Preparation of resin composition for sound insulation layer

To 100 parts by weight of a polyvinyl butyral resin was added 68.8 parts by weight of a plasticizer. The materials were sufficiently kneaded in a mixing roll, whereby a resin composition for a sound insulation layer was prepared. The polyvinyl butyral had a hydroxy group content of 23.3 mol%, an acetyl group content of 12.5 mol%, a butyral group content of 64.2 mol%, and an average degree of polymerization of 2,300. The plasticizer used was triethylene glycol-di-2-ethylhexanoate (3GO).

(3) Production of interlayer film for laminated glass

The resin composition for a sound insulation layer and the resin composition for a protective layer were co-extruded into a three-layer structure interlayer film for a laminated glass which had a width of 100 cm and in which a protective layer (average thickness: 350 $\mu$m), a sound insulation layer (average thickness: 100 $\mu$m), and a protective layer (average thickness: 350 $\mu$m) were laminated in the stated order in the thickness direction. The interlayer film was wound into a roll. The die of the extruder used in the lip method at this time had a straightness of 4 $\mu$m over 1,000 mm in the width direction and included protrusions and recesses of a size of 2 $\mu$m in an 80-mm section in the width direction. The press rolls used had a cylindricity of 4 $\mu$m.

For the obtained interlayer film for a laminated glass, calculations were performed as in Example 1 to determine the average thickness in the width direction, the maximum thickness curvature in the width direction, and the maximum thickness difference in the width direction. A laminated glass was also produced as in Example 1, and calculations were performed to determine the maximum thickness curvature of the laminated glass in the width direction and the maximum thickness curvature of the interlayer film for a laminated glass in the laminated glass in the width direction.

(Example 3)

An interlayer film for a laminated glass was produced as in Example 2, except that the extrusion conditions were set such that the interlayer film for a laminated glass obtained after imparting protrusions and recesses satisfied the following: each protective layer has a rectangular cross section in the thickness direction that has a maximum thickness of 409 $\mu$m and a minimum thickness of 329 $\mu$m; the sound insulation layer has a rectangular cross section in the thickness direction that has a maximum thickness of 129 $\mu$m and a minimum thickness of 98 $\mu$m; and the entire interlayer film has a rectangular cross section in the thickness direction that has an average film thickness of 825 $\mu$m. For the interlayer film for a laminated glass, calculations were performed to determine the average thickness in the width direction, the maximum thickness curvature in the width direction, and the maximum thickness difference in the width direction. A laminated glass was also produced as in Example 1, and calculations were performed to determine the maximum thickness curvature of the laminated glass in the width direction and the maximum thickness curvature of the interlayer film for a laminated glass in the laminated glass in the width direction.

(Example 4)

(Production of wedge-shaped interlayer film for laminated glass)

A resin composition for a sound insulation layer and a resin composition for a protective layer, both obtained as in Example 2, were co-extruded through a co-extruder into a three-layer structure interlayer film for a laminated glass in which a protective layer, a sound insulation layer, and a protective layer were laminated in the stated order in the thickness direction. The interlayer film was wound into a roll.

The extrusion conditions were set such that the interlayer film for a laminated glass obtained after imparting protrusions and recesses satisfied the following: each protective layer has a wedge-shaped cross section in the thickness direction that has a maximum thickness of 790 $\mu$m and a minimum thickness of 280 $\mu$m; the sound insulation layer has a wedge-shaped cross section in the thickness direction that has a maximum thickness of 180 $\mu$m and a minimum thickness of 90 $\mu$m; and the entire interlayer film has a wedge-shaped cross section in the thickness direction that has a maximum thickness of 1,440 $\mu$m and a minimum thickness of 700 $\mu$m. The extrusion conditions were set such that the entire interlayer film had a width of 100 cm.

At this time, the lip die temperature was adjusted to have a gradient within a range of 100°C to 280°C in the width direction such that the temperature at the end on the thinner side of the entire interlayer film was lower and the temperature at the end on the thicker side of the entire interlayer film was higher. The lip die was adjusted to have a lip gap within a range of 1.0 to 4.0 mm. The speed difference between rolls for carrying the resin film ejected from the lip die before winding was adjusted to 15% or less. The first roll for carrying the resin film ejected from the die was positioned lower and more forward in the machine direction than the die. The extrusion amount from the extruder was set to 700 kg/h and the speed of the first roll for carrying the resin film was set to 7 m/min.

The die of the extruder used in the lip method had a straightness of 4 $\mu$m over 1,000 mm in the width direction and included protrusions and recesses of a size of 2 $\mu$m in an 80-mm section in the width direction. The press rolls used had a cylindricity of 3 $\mu$m.

For the obtained interlayer film for a laminated glass, calculations were performed as in Example 1 to determine the average thickness in the width direction, the maximum thickness curvature in the width direction, and the maximum thickness difference in the width direction. A laminated glass was also produced as in Example 1, and calculations were performed to determine the maximum thickness curvature of the laminated glass in the width direction and the maximum thickness curvature of the interlayer film for a laminated glass in the laminated glass in the width direction.

(Example 5)

(1) Preparation of resin composition for color layer

To 100 parts by weight of a polyvinyl butyral resin were added 38.8 parts by weight of a plasticizer, 0.5 parts by weight of an UV blocking agent, and 0.5 parts by weight of an antioxidant. The materials were sufficiently kneaded in a mixing roll, whereby a resin composition was prepared. The polyvinyl butyral had a hydroxy group content of 30 mol%, an acetyl group content of 1 mol%, a butyral group content of 69 mol%, and an average degree of polymerization of 1,700. The plasticizer used was triethylene glycol-di-2-ethylhexanoate (3GO). The UV blocking agent used was 2-(2'-hydroxy-3'-t-butyl-5-methylphenyl)-5-chlorobenzotriazole (produced by BASF, "Tinuvin 326"). The antioxidant used was 2,6-di-t-butyl-p-cresol (BHT).

The obtained composition was mixed with carbon black as a colorant and sufficiently kneaded in a mixing roll, whereby a resin composition for a color layer was obtained. The amount of the colorant added was 0.260% by weight in 100% by weight of the color layer.

(2) Production of interlayer film for laminated glass

The obtained resin composition for a color layer was co-extruded with a resin composition for a sound insulation layer and a resin composition for a protective layer, both obtained as in Example 2, through a co-extruder into a five-layer structure interlayer film for a laminated glass in which a protective layer, a color layer, a protective layer, a sound insulation layer, and a protective layer were laminated in the stated order in the thickness direction. The interlayer film was wounded into a roll.

The extrusion conditions were set such that the interlayer film for a laminated glass obtained after imparting protrusions and recesses satisfied the following: each protective layer and the color layer has a rectangular cross section in the thickness direction that has a maximum thickness of 423 $\mu$m and a minimum thickness of 322 $\mu$m; the sound insulation layer has a rectangular cross section in the thickness direction that has a maximum thickness of 123 $\mu$m and a minimum thickness of 96 $\mu$m; and the entire interlayer film has a rectangular cross section in the thickness direction that has an average film thickness of 810 $\mu$m.

At this time, the lip die temperature was adjusted to have a gradient within a range of 100°C to 280°C in the width direction such that the temperature at the end on the thinner side of the entire interlayer film was lower and the temperature at the end on the thicker side of the entire interlayer film was higher. The lip die was adjusted to have a lip gap within a range of 1.0 to 4.0 mm. The speed difference between rolls for carrying the resin film ejected from the lip die before winding was adjusted to 15% or less. The first roll for carrying the resin film ejected from the die was positioned lower and more forward in the machine direction than the die. The extrusion amount from the extruder was set to 700 kg/h and the speed of the first roll for carrying the resin film was set to 7 m/min.

The die of the extruder used in the lip method at this time had a straightness of 4 $\mu$m over 1,000 mm in the width direction and included protrusions and recesses of a size of 2 $\mu$m in an 80-mm section in the width direction. The press rolls used had a cylindricity of 3 $\mu$m.

For the obtained interlayer film for a laminated glass, calculations were performed as in Example 1 to determine the average thickness in the width direction, the maximum thickness curvature in the width direction, and the maximum thickness difference in the width direction. A laminated glass was also produced as in Example 1, and calculations were performed to determine the maximum thickness curvature of the laminated glass in the width direction and the maximum thickness curvature of the interlayer film for a laminated glass in the laminated glass in the width direction.

(Comparative Example 3)

An interlayer film for a laminated glass was prepared as in Example 2 and wound into a roll, except that the die of the extruder used in the lip method had a straightness of 10 μm over 1,000 mm in the width direction and included protrusions and recesses of a size of 2 μm in an 80-mm section in the width direction, and that the press rolls used had a cylindricity of 6 μm. A laminated glass was also produced as in Example 2.

(Comparative Example 4)

An interlayer film for a laminated glass was prepared as in Example 2 and wound into a roll, except that the die of the extruder used in the lip method had a straightness of 11 μm over 1,000 mm in the width direction and included protrusions and recesses of a size of 2 μm in an 80-mm section in the width direction, and that the press rolls used had a cylindricity of 8 μm. A laminated glass was also produced as in Example 2.

(Evaluation)

The interlayer films for a laminated glass obtained in the examples and the comparative examples were evaluated as follows. Table 1 shows the results.

(1) Production of sample laminated glass

The interlayer film for a laminated glass was drawn out from the obtained roll and cut at a position of 70 cm in the machine direction, whereby a test sample having a size of 70 cm × film width (1 m) was obtained. The interlayer film for a laminated glass was left to stand on a flat surface at 20°C and 30 RH% or lower for 24 hours, and then used to produce a laminated glass.
The interlayer film for a laminated glass was interposed between two glass plates (each having a thickness of 2 mm, a width of 750 mm, and a length of 500 mm) such that the width direction of the interlayer film was in parallel with the crosswise direction of the glass plates, that the machine direction of the interlayer film for a laminated glass was in parallel with the lengthwise direction of the glass plates, and that the center of the interlayer film for a laminated glass was positioned at the center of the glass plates. The interlayer film for a laminated glass protruding from the glass plates was cut off, whereby a laminate was obtained.
The obtained laminate was conveyed on a conveyer through a heating zone so that the laminate was heated, and then passed between nip rolls to squeeze out the air remaining between the glass and the interlayer film while the laminate was thermally pressure-bonded. The air between the interlayer film for a laminated glass and the glass was thus reduced, whereby the laminate was preliminarily pressure bonded. The laminate after the preliminary pressure bonding was subjected to final pressure bonding in an autoclave at high temperature and high pressure, whereby a laminated glass was obtained.
The heating temperature in the heating zone was 220°C. The glass surface temperature after passing through the heating zone was 80°C. The heating time was one minute, and the nip pressure was 3 kg/cm$^2$ or lower. The temperature inside the autoclave was 140°C at maximum, and the pressure was 14 kg/cm$^2$. The heating and pressurizing time in the autoclave was at most 30 minutes.

(2) Distortion test

A distortion test was performed using the obtained sample laminated glass.

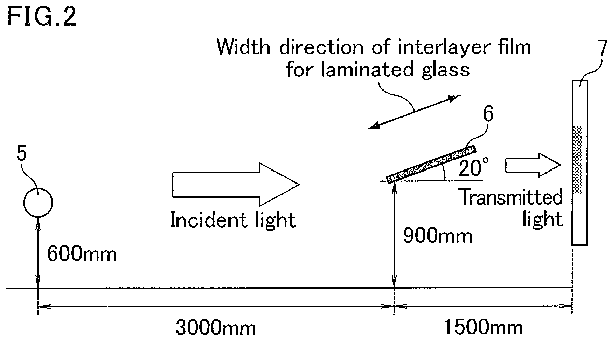

Fig. 2 shows a schematic view explaining the distortion test. Specifically, in a darkroom, a light source 5 (produced by Nippon Gijutsu Center Co., Ltd., SLight SA160), a laminated glass 6, and a screen 7 were arranged in a straight line in the stated order such that the light source 5 and the laminated glass 6 were horizontally spaced by 3,000 mm and the laminated glass 6 and the screen 7 were horizontally spaced by 1,500 mm. The height of the light source 5 was 600 mm, and the angle of the light beam was 20° upward from the horizontal. The height of the laminated glass 6 at the lowest point was 900 mm. The laminated glass 6 was at an angle of 18° such that the side adjacent to the screen was higher, and placed such that the width direction of the interlayer film for a laminated glass was inclined from the light source toward the screen. The angle of the screen 7 was vertical. The screen was white and generated no shadow due to its surface irregularities.
A transmission projection image projected on the screen 7 at the above state was subjected to imaging with a camera 8 (produced by FUJIFILM Corporation, FINEPIX F900EXR). The measurement conditions were as follows:

aperture f/5.9, exposure time 1/8 s, ISO800, focal length 42 mm, no flash, image size 4,608 × 3,456 pixels. The size of the captured image was reduced to 640 × 640 pixels, and 8-bit gray scaling was performed.

Then, the gray scale image was output to a text file. Thirty five sections were continuously selected at intervals of 10 pixels in the vertical direction of the projection image. A simple moving average (25 pixels) in the vertical direction was determined for each section. This was taken as the base luminance and subtracted from the section, whereby slope correction was performed. Further, for luminance value smoothing, simple moving averaging (5 pixels) was performed for each section. After a variance value between 11 pixels was calculated in the vertical direction, the maximum value of all the variance values of the 35 sections was calculated. The smaller the maximum value of luminance variance, the better the laminated glass can reduce distortion.

[Table 1]

| | Shape of entire interlayer film for laminated glass | | | | | Sound insulation layer | | | Protective layer | | | Laminated glass | Interlayer film for laminated glass in laminated glass | Distortion |
|---|---|---|---|---|---|---|---|---|---|---|---|---|---|---|
| | Average thickness (μm) | Structure | Cross section | Maximum thickness curvature in width direction (m⁻¹) | Maximum thickness difference in width direction (μm) | Maximum thickness (μm) | Minimum thickness (μm) | Cross section | Maximum thickness (μm) | Minimum thickness (μm) | Cross section | Maximum thickness curvature in width direction (m⁻¹) | Maximum thickness curvature in width direction (m⁻¹) | Maximum luminance variance |
| Example 1 | 825 | Single layer | Rectangular shape | 0.007 | 15 | - | - | - | - | - | - | 0.002 | 0.002 | 9.3 |
| Example 2 | 796 | Protective layer/ Sound insulation layer/ Protective layer | Rectangular shape | 0.010 | 18 | 114 | 102 | Rectangular shape | 436 | 328 | Rectangular shape | 0.003 | 0.003 | 9.7 |
| Example 3 | 825 | Protective layer/ Sound insulation layer/ Protective layer | Rectangular shape | 0.008 | 26 | 129 | 98 | Rectangular shape | 409 | 329 | Rectangular shape | 0.003 | 0.003 | 9.4 |
| Example 4 | 1111 | Protective layer/ Sound insulation layer/ Protective layer | Wedge shape | 0.007 | 14 | 180 | 90 | Wedge shape | 790 | 280 | Wedge shape | 0.002 | 0.002 | 7.4 |

| | Shape of entire interlayer film for laminated glass | | | | | Sound insulation layer | | | Protective layer | | | Laminated glass | Interlayer film for laminated glass in laminated glass | Distortion |
|---|---|---|---|---|---|---|---|---|---|---|---|---|---|---|
| | Average thickness (μm) | Structure | Cross section | Maximum thickness curvature in width direction (m⁻¹) | Maximum thickness difference in width direction (μm) | Maximum thickness (μm) | Mnimum thickness (μm) | Cross section | Maximum thickness (μm) | Mnimum thickness (μm) | Cross section | Maximum thickness curvature in width direction (m⁻¹) | Maximum thickness curvature in width direction (m⁻¹) | Maximum luminance variance |
| Example 5 | 810 | Protective layer/ Color layer/ Protective layer/ Sound insulation layer/ Protective layer | Rectangular shape | 0.009 | 13 | 123 | 96 | Rectangular shape | 423 | 322 | Rectangular shape | 0.003 | 0.003 | 10.0 |
| Comparative Example 1 | 801 | Single layer | Rectangular shape | 0.012 | 13 | - | - | - | - | - | - | 0.004 | 0.004 | 14.6 |
| Comparative Example 2 | 842 | Single layer | Rectangular shape | 0.014 | 16 | - | - | - | - | - | - | 0.005 | 0.005 | 15.9 |
| Comparative Example 3 | 801 | Protective layer/ Sound insulation layer/ Protective layer | Rectangular shape | 0.014 | 19 | 129 | 98 | Rectangular shape | 409 | 329 | Rectangular shape | 0.005 | 0.005 | 14.4 |

EP 3 858 798 A1

16

| | Shape of entire interlayer film for laminated glass | | | | | Sound insulation layer | | | Protective layer | | | Laminated glass | Interlayer film for laminated glass in laminated glass | Distortion |
|---|---|---|---|---|---|---|---|---|---|---|---|---|---|---|
| | Average thickness ($\mu$m) | Structure | Cross section | Maximum thickness curvature in width direction ($m^{-1}$) | Maximum thickness difference in width direction ($\mu$m) | Maximum thickness ($\mu$m) | Mnimum thickness ($\mu$m) | Cross section | Maximum thickness ($\mu$m) | Mnimum thickness ($\mu$m) | Cross section | Maximum thickness curvature in width direction ($m^{-1}$) | Maximum thickness curvature in width direction ($m^{-1}$) | Maximum luminance variance |
| Comparative Example 4 | 754 | Protective layer/ Sound insulation layer/ Protective layer | Rectanglular shape | 0.017 | 18 | 116 | 99 | Rectanglular shape | 395 | 340 | Rectanglular shape | 0.007 | 0.007 | 14.9 |

INDUSTRIAL APPLICABILITY

The present invention can provide an interlayer film for a laminated glass capable of providing a laminated glass that reduces the occurrence of optical distortion, a laminated glass including the interlayer film for a laminated glass, and a method for producing the interlayer film for laminated glass.

REFERENCE SIGNS LIST

1     interlayer film for a laminated glass
2     roll
3     test sample
5     light source
6     laminated glass
7     screen

**Claims**

1. An interlayer film for a laminated glass, having a maximum thickness curvature in a width direction of the interlayer film for a laminated glass of 0.010 m$^{-1}$ or less.

2. The interlayer film for a laminated glass according to claim 1, having a maximum thickness difference in the width direction of 15 $\mu$m or less as measured in a 150-mm section of the interlayer film for a laminated glass.

3. A laminated glass including:

    a pair of glass plates; and
    the interlayer film for a laminated glass according to claim 1 or 2 interposed between the pair of glass plates,
    the interlayer film for a laminated glass in the laminated glass having a maximum thickness curvature in the width direction of 0.004 m$^{-1}$ or less.

4. A laminated glass including:

    a pair of glass plates; and
    the interlayer film for a laminated glass according to claim 1 or 2 interposed between the pair of glass plates,
    the laminated glass having a maximum thickness curvature in a width direction of the laminated glass of 0.010 m$^{-1}$ or less.

5. The laminated glass according to claim 4,

    wherein the maximum thickness curvature of the laminated glass in the width direction of the laminated glass is 0.003 m$^{-1}$ or less.

6. A method for producing the interlayer film for a laminated glass according to claim 1 or 2, comprising

    a step of imparting protrusions and recesses to a surface of the interlayer film for a laminated glass while extrusion molding a raw material resin composition through an extruder, the step being performed by a lip method, the extruder including a die that has a straightness of 4 $\mu$m or less over 1,000 mm in a width direction of the die and includes protrusions and recesses of a size of 2 $\mu$m or smaller in an 80-mm section in the width direction.

7. The method for producing an interlayer film for a laminated glass according to claim 6,

    wherein press rolls having a cylindricity of 4 $\mu$m or less are used.

FIG.1

(a)

Machine direction

Width
direction

(b)

Width
direction

Machine direction

FIG.2

Width direction of interlayer film
for laminated glass

7

6

20°

5

Incident light

Transmitted
light

600mm

900mm

3000mm

1500mm

## INTERNATIONAL SEARCH REPORT

| International application No. |
| --- |
| PCT/JP2019/037931 |

A. CLASSIFICATION OF SUBJECT MATTER
Int.Cl. C03C27/12(2006.01)i, B32B17/10(2006.01)i

According to International Patent Classification (IPC) or to both national classification and IPC

B. FIELDS SEARCHED

Minimum documentation searched (classification system followed by classification symbols)
Int.Cl. C03C27/12, B32B17/06-17/12

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y<br>A | JP 11-255540 A (BRIDGESTONE CORP.) 21 September 1999, claims, paragraphs [0003], [0006]-[0010], [0021], fig. 1 & US 5547762 A, column 2, lines 20-23, column 5, lines 11-58, column 10, line 53 to column 11, line 6, fig. 1-2 & DE 4308885 A1 | 1-5<br>6, 7 |

☒ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 04 December 2019 (04.12.2019) | 17 December 2019 (17.12.2019) |

| Name and mailing address of the ISA/<br>Japan Patent Office<br>3-4-3, Kasumigaseki, Chiyoda-ku,<br>Tokyo 100-8915, Japan | Authorized officer |
| --- | --- |
| | Telephone No. |

Form PCT/ISA/210 (second sheet) (January 2015)

**INTERNATIONAL SEARCH REPORT**

International application No.

PCT/JP2019/037931

C (Continuation).   DOCUMENTS CONSIDERED TO BE RELEVANT

| Category* | Citation of document, with indication, where appropriate, of the relevant passages | Relevant to claim No. |
|---|---|---|
| Y | WO 2015/199191 A1 (SEKISUI CHEMICAL CO., LTD.) 30 December 2015, paragraph [0007] & US 2017/0144362 A1, paragraph [0012] & EP 3162536 A1 & CN 106103047 A & KR 10-2017-0022971 A & MX 2016015601 A & RU 2017102177 A | 1-5 |
| A | JP 2005-514306 A (SOLUTIA INC.) 19 May 2005, paragraph [0036] & US 2003/0148114 A1, paragraph [0042] & JP 4699695 B2 & WO 2003/057478 A1 & EP 1458564 A1 & CA 2471510 A & BR 215384 A & NO 20043175 L & IL 162701 D & NZ 534134 A & CN 1617796 A & TW 200303262 A & RU 2004122917 A & AP 1871 A & AT 430025 T & ZA 200405066 A & ES 2324210 T & DK 1458564 T & S1 1458564 T & PT 1458564 E & IL 162701 A & AU 2002360716 A & KR 10-0966283 B1 & MXPA04006394A & UA 77480 C | 1-7 |
| A | JP 06-321586 A (SEKISUI CHEMICAL CO., LTD.) 22 November 1994, entire text (Family: none) | 1-7 |
| A | WO 2016/052615 A1 (SEKISUI CHEMICAL CO., LTD.) 07 April 2016, entire text & US 2017/0165938 A1, the whole document & EP 3202735 A1 & CN 106164009 A & KR 10-2017-0066279 A & TW 201711844 A & MX 2017003744 A & RU 2017114990 A | 1-7 |

Form PCT/ISA/210 (continuation of second sheet) (January 2015)

**EP 3 858 798 A1**